# NEUE EUROPÄISCHE PATENTSCHRIFT

(11) **EP 0 792 973 B2**
(45) Veröffentlichungstag und Bekanntmachung des Hinweises auf die Entscheidung über den Einspruch: **03.07.2002**
(45) Hinweis auf die Patenterteilung: 30.12.1998
(21) Anmeldenummer: 97101166.3
(22) Anmeldetag: 25.01.1997
(51) Int. Cl.: E04B 1/68, C09D 153/02

(54) **Kalt verarbeitbares Fugenband**
Cold processable joint strip
Bande de jointoiement travaillable à froid

(30) Priorität: 03.02.1996 DE 19603896
(43) Veröffentlichungstag der Anmeldung: 03.09.1997
(73) Patentinhaber: DENSO-Holding GmbH & Co., 51371 Leverkusen (DE)
(72) Erfinder: Faerber, Peter, Dr., 51371 Leverkusen (DE)
(74) Vertreter: Langmaack, Jürgen, Dipl.-Ing.

(56) Entgegenhaltungen:
- DE-A- 1 965 092
- DE-A- 2 225 358
- DE-A- 4 413 754
- DE-C- 4 126 090
- DE-U- 9 313 030
- DATENBANK "CHEMICAL ABSTRACTS" (DATEN- ANBIETER: STN); Abs.107:238 987, Colombus, OH, USA; & A.D. SHULYAK et al:"bituminous vibration-damping lining with an adhesive XP002030281

## Beschreibung

Fugenbänder werden insbesondere im Straßenbau zur Herstellung von Nähten und von Anschlüssen verwendet. Nähte entstehen bei einem Verbund von nebeneinanderliegenden Einbaubahnen aus Mischgut mit vergleichbaren Eigenschaften. Als Anschlüsse werden bezeichnet die Verbindungen von Einbaubahnen aus Mischgut mit unterschiedlichen Eigenschaften. Dazu gehören Walzasphalt (Asphaltbeton, Split, Mastixasphalt) an Gußasphalt und umgekehrt. Die Verbindung von Gußasphalt an Gußasphalt ist ebenfalls als Anschluß herzustellen. Eine besondere Notwendigkeit für sogenannte Anschlüsse ergibt sich bei einem Bauen "neu" gegen "alt", da hier der Unterschied in den Eigenschaften der einzubringenden Deckschichtmaterialien schon allein durch die Liegedauer gegeben ist, unabhängig von der Mischgutart bei den zu verbindenden Flächen.

Nähte und Anschlüsse sind Beanspruchungen aus Verkehr und Klima ausgesetzt, wobei die Kräfte aus dem Verkehr besonders einflußreich sind, wenn Ausgrabungen vorliegen. Durch Setzung im ungebundenen Bereich bauen sich Scherkräfte auf, die die Verbindung neu/alt besonders in der Deckschicht spürbar belasten. Die Anforderungen an derartige Verbindungen sind daher sehr hoch. Sie sollen wasserdicht sein, d. h. sich nicht öffnen unter Einwirkung von Verkehr und Klima. Es gilt daher mehr Bitumen als bisher an die Anbindungsflanke zu bringen. Dies ist besonders wichtig bei Anschlüssen. Hier muß es das Ziel sein, an dieser Stelle ein weiches Gelenk einzubauen, also eine Höchstmenge an Bitumen zum Dichten, Bewegen und Haften zu plazieren.

Dieses Problem wurde bisher dadurch gelöst, daß vor dem Einbringen der neuen Asphaltdeckschicht die Flanke der bestehenden alten Asphaltdeckschicht mit einer bitumenhaltigen Grundierung gestrichen wurde und anschließend ein vorgefertigtes Bitumenfugenband an die Flanke angelegt wurde, wobei zum Bewirken einer Haftung des Bitumenfugenbandes an der Nahtflanke das Bitumenfugenband mit einer Propanflamme angewärmt und dann an die Flanke angedrückt werden muß. Diese Arbeiten müssen sehr sorgfältig ausgeführt werden. Die Temperatur des Mischgutes der neu einzubringenden Deckschicht, das unmittelbar an das verlegte Fugenband herangebracht wird, reicht hierbei nicht aus, um Mängel bei der Verlegung des Fugenbandes auszugleichen, so daß auch nach dem anschließenden Anwalzen kein dichter Verschluß der Naht gegeben ist. Bei einer nicht ausreichenden Haftung ist es möglich, daß durch den Einfluß mechanischer und/oder thermisch induzierter Spannungen sich die Naht im Bereich der Nahtflanke geringfügig öffnet, so daß Wasser eindringen kann und die Deckschicht in diesem Bereich Schaden nimmt.

Aus DE-U-9313030.9 ist ein Material zur Herstellung von Fugenbändern bekannt, das aus einer offensichtlich nicht klebefähigen Bitumenmasse hergestellt ist.

Aus Chemical Abstracts 107:238987 CA ist ein Veröffentlichungshinweis von Shulyak bekannt, der eine vibrationsdämpfende Verkleidung für die Verwendung im Automobilbau beschreibt. Es handelt sich hierbei um ein Bitumenmaterial, das mit einer Kleberbeschichtung versehen ist. Sowohl von der Zusammensetzung als auch vom Anwendungsbereich her darf dieses Bitumenmaterial nicht selbstklebend sein sondern muß eher plastisch elastische Eigenschaften aufweisen, da sonst der gewünschte Dämpfungseffekt gar nicht erreichbar ist. Darüber hinaus darf dieses Bitumenmaterial auch bei hohen Temperaturen auf seiner freiliegenden, d. h. nicht mit einer Kleberschicht versehenen Oberfläche keine Klebefähigkeit entwikkeln, da sonst beispielsweise bei einer damit beschichteten Motorraumhaube eine erhebliche Verschmutzungsgefahr bestünde. Das hier angegebenen Bitumenmaterial ist für die Verwendung als Straßenbaumterial dem der Erfindung zugrunde liegenden Anwendungsbereich völlig ungeeignet, da es beim Einbringen der neuen heißen Deckschicht die dann erforderliche Klebefähigkeit nicht zu entwickeln vermag.

Der Erfindung liegt die Aufgabe zugrunde, ein Fugenband und ein Verfahren zu schaffen, das eine kalte Verlegung, d. h. ohne Zuhilfenahme einer Flamme, ermöglicht.

Diese Aufgabe wird gelöst durch ein Fugenband mit den Merkmalen des Anspruchs 1. Ein derartig ausgebildetes Fugenband hat den Vorteil, daß beim Verlegen an der Nahtflanke auf die Anwendung einer Propanflamme verzichtet werden kann, da bereits durch ein Andrücken des Fugenbandes an die Nahtflanke die erforderliche Haftung erzielt wird. Bei entsprechender Einstellung des verwendeten Klebers ist es hierbei möglich, auch bei Temperaturen etwas oberhalb des Gefrierpunktes eine Haftung zwischen Fugenband und Nahtflanke zu erreichen, die den gestellten Anforderungen an die Haftung und Dichtigkeit erfüllt.

In zweckmäßiger Ausgestaltung ist hierbei vorgesehen, daß die Kleberschicht eine Dicke zwischen 0,2 und 4 mm aufweist.

In einer Ausgestaltung der Erfindung ist vorgesehen, daß der Kleber zusammengesetzt ist aus

| | |
|---|---|
| lineares Styrol-Butadien-Styrol-Blockcopolymer | 5 - 40% vorzugsweise 10 - 20% |
| lineares Styrol-Isopren-Styrol-Blockcopolymer | 4 - 40% vorzugsweise 10 - 20% |
| Polyterpenharz aus alpha-Pinen | 20 - 80% vorzugsweise 30 - 50% |
| vorwiegend bis rein naphthenisches Öl | 5 - 30% vorzugsweise 5 - 10% |
| Phenolantioxydans | 0,1 - 0,3% vorzugsweise 0,1-0,2% |

In einer anderen Ausgestaltung der Erfindung ist vorgesehen, daß der Kleber zusammengesetzt ist aus

| | |
|---|---|
| lineares Styrol-Butadien-Styrol-Blockcopolymer | 5 - 40% vorzugsweise 10 - 20% |
| lineares Styrol-lsopren-Styrol-Blockcopolymer | 5 - 40% vorzugsweise 10 - 20% |
| vorwiegend bis rein naphthenisches Öl | 5 - 30% vorzugsweise 10 - 20% |
| Glycerinester von hydriertem Kolophonium | 10 - 50% vorzugsweise 15 - 35% |
| Kohlenwasserstoffharz | 20 - 70% vorzugsweise 30 - 60% |
| Phenolantioxydans | 0,1 - 0,3% vorzugsweise 0,1-0,2% |

Schließlich ist in einer Ausgestaltung der Erfindung vorgesehen daß der Kleber zusammengesetzt ist aus

| | |
|---|---|
| lineares Styrol-Butadien-Styrol-Blockcopolymer | 5 - 40% vorzugsweise 10 - 20% |
| lineares Styrol-Isopren-Styrol-Blockcopolymer | 5 - 40% vorzugsweise 10 - 20% |
| vorwiegend bis rein naphthenisches Öl | 5 - 30% vorzugsweise 10 - 20% |
| Veresterungsprodukt aus Naturharzsäuren und Polyetheralkoholen | 5 - 40% vorzugsweise 10 - 25% |
| Hydroabietylalkohol | 10 - 30% vorzugsweise 15 - 25% |

Zweckmäßig ist es, wenn erfindungsgemäß der Kleber ein Polymer-Gemisch enthält, das einen Anteil an OH-Gruppen von 4 - 10%, vorzugsweise 5 - 6,5% aufweist, zur Reaktion mit einem Primer, der ein Isocyanat-Gemisch enthält mit einem Anteil an Isocyanatgruppen von 20 bis 40%, vorzugsweise 30 bis 35%. Ein derart konzipierter Kleber bietet trotz des zusätzlichen Arbeitsganges, der durch den Voranstrich der Nahtflanke mit dem Primer gegeben ist, den Vorteil einer erhöhten Haftung, auch bei einer erhöhten Feuchtigkeit. Durch den Isocyanatanteil reagiert die Feuchtigkeit an der Nahtflanke ab. Die dann noch verbleibenden Restanteile der Isocyanatgruppen reagieren wiederum mit dem OH-Gruppen des Klebers, so daß auch in diesen Einsatzfällen eine hohe Haftung des Fugenbandes an der Nahtflanke gewährleistet ist.

Der Kleber kann bei der Herstellung des Fugenbandes auf die Flächenseite heiß aufgebracht werden oder aber auch als Flachbandrollenware kalt aufgebracht werden. Da ohnehin ein sogenanntes Trennpapier vorgesehen sein muß, das die Kleberschicht abdeckt, kann es hierbei zweckmäßig sein, wenn die Kleberschicht zusammen mit dem Trennpapier auf das Fugenband aufgebracht wird, das anschließend dann aufgerollt werden kann.

Alle vorstehenden %-Angaben stellen Gewichts-% dar.

Zweckmäßig ist es auch, wenn die Kleberschicht so eingestellt ist, daß sie ihre Klebeigenschaften durch Anlösung erst dann entwickelt, wenn sie mit einem Primer in Berührung kommt, der höher siedende Lösungsmittel enthält. Die Einstellung des Klebers wird hierbei so vorgenommen, daß er bei Temperaturen bis hin zu etwa Raumtemperaturen, also bis in Bereiche von max. 30°C noch keine oder nur geringe Klebeigenschaften aufweist. Erst wenn das mit der Kleberschicht versehene Fugenband durch Andrücken an die Nahtflanke mit dem Primer in Berührung kommt, so daß die im Primer enthaltenen höher siedenden Lösemittel auf die Kleberschicht einwirken, tritt die Klebfähigkeit und damit die Haftung ein.

Das vorstehend in verschiedenen Modifikationen erläuterte Fugenband gemäß der Erfindung besitzt eine werksseitig bereits aufgebrachte Kleberschicht. Dies ermöglicht es, ggf. nach einem Voranstrich der Nahtflanke mit einem entsprechenden Primer das Fugenband zu verlegen und nur durch Andrücken mit einem entsprechenden Werkzeug, beispielsweise einer von Hand geführten Andruckrolle, ein zuverlässiges Anhaften des Fugenbandes an der Nahtflanke zu bewirken. Ein Anwärmen mit einer Propangasflamme zur Erzeugung der Haftung zwischen Nahtflanke und Fugenbank entfällt hierbei vollständig.

## Patentansprüche

1. Kaltverlegbares Fugenband zur Verwendung im Straßenbau, bestehend aus polymervergütetem Straßenbaubitumen, das auf wenigstens einer Seite mit einer gesonderten Kleberschicht verbunden ist.

2. Fugenband nach Anspruch 1, **dadurch gekennzeichnet, daß** die Kleberschicht eine Dicke zwischen 0,2 und 4 mm aufweist.

3. Fugenband nach Anspruch 1 oder 2, **dadurch gekennzeichnet, daß** der Kleber zusammengesetzt ist aus
| | |
|---|---|
| lineares Styrol-Butadien-Styrol-Blockcopolymer | 5 - 40% vorzugsweise 10 - 20% |
| lineares Styrol-Isopren-Styrol-Blockcopolymer | 4 - 40% vorzugsweise 10 - 20% |
| Polyterpenharz aus alpha-Pinen | 20 - 80% vorzugsweise 30 - 50% |
| vorwiegend bis rein naphthenisches Öl | 5 - 30% vorzugsweise 5 - 10% |
| Phenolantioxydans | 01 - 0,3% vorzugsweise 0,1-0.2% |

4. Fugenband nach Anspruch 1 oder 2, **dadurch gekennzeichnet, daß** der Kleber zusammengesetzt ist aus
| | |
|---|---|
| lineares Styrol-Butadien-Styrol-Blockcopolymer | 5 - 40% vorzugsweise 10 - 20% |
| lineares Styrol-Isopren-Styrol-Blockcopolymer | 5 - 40% vorzugsweise 10 - 20% |
| vorwiegend bis rein naphthenisches Öl | 5 - 30% vorzugsweise 10 - 20% |
| Glycerinester von hydriertem Kolophonium | 10 - 50% vorzugsweise 15 - 35% |
| Kohlenwasserstoffharz | 20 - 70% vorzugsweise 30 - 60% |
| Phenolantioxydans | 0,1 - 0,3% vorzugsweise 0,1-0,2% |

5. Fugenband nach Anspruch 1 oder 2, **dadurch gekennzeichnet, daß** der Kleber zusammengesetzt ist aus
| | |
|---|---|
| lineares Styrol-Butadien-Styrol-Blockcopolymer | 5 - 40% vorzugsweise 10 - 20% |
| lineares Styrol-Isopren-Styrol-Blockcopolymer | 5 - 40% vorzugsweise 10 - 20% |
| vorwiegend bis rein naphthenisches Öl | 5 - 30% vorzugsweise 10 - 20% |
| Veresterungsprodukt aus Naturharzsäuren und Polyetheralkoholen | 5 - 40% vorzugsweise 10 - 25% |
| Hydroabietylalkohol | 10 - 30% vorzugsweise 15 - 25% |

6. Fugenband nach einem der Ansprüche 1 bis 5, **dadurch gekennzeichnet, daß** der Kleber ein Polymer-Gemisch enthält, das einen Anteil an OH-Gruppen von 4 - 10%, vorzugsweise 5 bis 6,5% aufweist zur Reaktion mit einem Primer, der ein Isocyanat-Gemisch enthält mit einem Anteil an Isocyanat-Gruppen von 20 bis 40%, vorzugsweise 30 - 35%.

7. Fugenband nach einem der Ansprüche 1 bis 6, **dadurch gekennzeichnet, daß** die Kleberbeschichtung so eingestellt ist, daß die Klebeigenschaften durch Anlösung erst dann entwickelt werden, wenn der Kleber mit einem Primer in Berührung kommt, der höher siedende Lösungsmittel enthält.

## Claims

1. Joint tape for the use in roaad construction, which is cold processable and constisting of a polymer-enhanced road bitumen and which is provided with a separate adhesive layer on at leat one side.

2. A joint strip according to Claim 1, **characterised in that** the adhesive layer has a thickness of between 0.2 and 4 mm.

3. A joint strip according to Claim 1 or 2, **characterised in that** the adhesive is composed of
| | |
|---|---|
| linear styrene-butadiene-styrene block copolymer | 5 - 40%, preferably 10 - 20%, |
| linear styrene-isoprene-styrene block copolymer | 4 - 40%, preferably 10 - 20%, |
| polyterpene resin from alpha-pinene | 20 - 80%, preferably 30 - 50%, |
| predominantly to purely naphthenic oil | 5 - 30%, preferably 5 - 10%, |
| phenol antioxidant | 0.1 - 0.3%, preferably 0.1 - 0.2%. |

4. A joint strip according to Claim 1 or 2, **characterised in that** the adhesive is composed of
| | |
|---|---|
| linear styrene-butadiene-styrene block copolymer | 5 - 40%, preferably 10 - 20%, |
| linear styrene-isoprene-styrene block copolymer | 5 - 40%, preferably 10 - 20%, |
| predominantly to purely naphthenic oil | 5 - 30%, preferably 10 - 20%, |
| glycerol ester of hydrogenated colophony | 10 - 50%, preferably 15 - 35%, |
| hydrocarbon resin | 20 - 70%, preferably 30 - 60%, |
| phenol antioxidant | 0.1 - 0.3%, preferably 0.1 - 0.2%. |

5. A joint strip according to Claim 1 or 2, **characterised in that** the adhesive is composed of
| | |
|---|---|
| linear styrene-butadiene-styrene block copolymer | 5 - 40%, preferably 10 - 20%, |
| linear styrene-isoprene-styrene block copolymer | 5 - 40%, preferably 10 - 20%, |
| predominantly to purely naphthenic oil | 5 - 30%, preferably 10 - 20%, |
| esterification product of natural resin acids and polyethyl alcohols | 5 - 40%, preferably 10 - 25%, |
| hydroabietyl alcohol | 10 - 30%, preferably 15 - 25%. |

6. A joint strip according to one of Claims 1 to 5, **characterised in that** the adhesive contains a polymer mixture which has a content of OH groups of 4 -10%, preferably 5 to 6.5%, for reaction with a primer which contains an isocyanate mixture with a content of isocyanate groups of 20 to 40%, preferably 30 - 35%.

7. A joint strip according to one of Claims 1 to 6, **characterised in that** the adhesive coating is adjusted such that the adhesive properties are developed by partial solution only when the adhesive comes into contact with a primer which contains higher-boiling solvent.

## Revendications

1. Bande de jointoiement travaillable à froid destinée à être uteiisée dans la construction routiére constituée d'un bitumen routier amélioré au moyen d'un polymère et d'une couche d'adhesif particulière sur ou moins l'une de ses faces.

2. Bande de jointoiement selon la revendication 1, **caractérisée en ce que** la couche d'adhésif a une épaisseur comprise entre 0,2 et 4 mm.

3. Bande de jointoiement selon l'une des revendications 1 ou 2, **caractérisée en ce que** l'adhésif a la composition suivante :
copolymère séquencé linéaire de styrène-butadiène-styrène : 5 à 40 %, de préférence de 10 à 20 % ;
copolymère séquencé linéaire de styrène-isoprène-styrène : 4 à 40 %, de préférence de 10 à 20 % ;
résine polyterpénique issue de l'alpha-pinène : 20 à 80 %, de préférence de 30 à 50 % ;
huile de majoritairement à purement naphténique : 5 à 30 %, de préférence de 5 à 10 % ;
antioxydant phénolique : 0,1 à 0,3 %, de préférence de 0,1 à 0,2 %.

4. Bande de jointoiement selon l'une des revendications 1 ou 2, **caractérisée en ce que** l'adhésif a la composition suivante :
copolymère séquencé linéaire de styrène-butadiène-styrène : 5 à 40 %, de préférence de 10 à 20 % ;
copolymère séquencé linéaire de styrène-isoprène-styrène : 5 à 40 %, de préférence de 10 à 20 % ;
huile de majoritairement à purement naphténique : 5 à 30 %, de préférence de 10 à 20 % ;
ester de glycérine et de colaphane hydratée : 10 à 50 %, de préférence de 15 à 35 % ;
résine d'hydrocarbure : 20 à 70 %, de préférence de 30 à 60 % ;
antioxydant phénolique : 0,1 à 0,3 %, de préférence de 0,1 à 0,2 %.

5. Bande de jointoiement selon l'une des revendications 1 ou 2, **caractérisée en ce que** l'adhésif a la composition suivante :
copolymère séquencé linéaire de styrène-butadiène-styrène : 5 à 40 %, de préférence de 10 à 20 % :
copolymère séquencé linéaire de styrène-isoprène-styrène : 4 à 40 %, de préférence de 10 à 20 % :
huile de majoritairement à purement naphténique : 5 à 30 %, de préférence de 10 à 20 % :
produit d'estérification d'acides résiniques naturels et de polyéther alcools : 5 à 40 %, de préférence de 10 à 25 % ;
alcool hydroabiétylique : 10 à 30 %, de préférence de 15 à 25 %.

6. Bande de jointoiement selon l'une des revendications 1 à 5, **caractérisée en ce que** l'adhésif contient un mélange de polymères présentant une proportion de 4 à 10 %, de préférence de 5 à 6,5 % de groupes OH pour réagir avec une couche d'apprêt contenant un mélange d'isocyanates avec une proportion de 20 à 40 %, de préférence de 30 à 35 % de groupes isocyanate.

7. Bande de jointoiement selon l'une des revendications 1 à 6, **caractérisée en ce que** le revêtement avec l'adhésif est ajusté de telle sorte que les propriétés adhésives ne se développent par dissolution que lorsque l'adhésif entre en contact avec une couche d'apprêt contenant des solvants à point d'ébullition plus élevé.
